# EUROPÄISCHE PATENTSCHRIFT

(11) **EP 2 049 858 B1**
(45) Veröffentlichungstag und Bekanntmachung des Hinweises auf die Patenterteilung: **23.12.2009**
(21) Anmeldenummer: 07801601.1
(22) Anmeldetag: 10.08.2007
(51) Int. Cl.: F27D 15/02, B65G 25/06

(54) **KÜHLER FÜR SCHÜTTGUT MIT EINER ABDICHTEINRICHTUNG ZWISCHEN BENACHBARTEN FÖRDERPLANKEN**
COOLER FOR BULK MATERIAL HAVING A SEALING DEVICE BETWEEN ADJOINING CONVEYING PLANKS
REFROIDISSEUR POUR MATIÈRES EN VRAC AVEC UN DISPOSITIF D'ÉTANCHÉITÉ ENTRE DES PLANCHES DE TRANSPORT VOISINES

(30) Priorität: 10.08.2006 EP 06016751
(43) Veröffentlichungstag der Anmeldung: 22.04.2009
(73) Patentinhaber: Claudius Peters Technologies GmbH, 21614 Buxtehude (DE)
(72) Erfinder: DIKTY, Mario, 21641 Apensen (DE); HILGRAF, Peter, 22149 Hamburg (DE); STAAK, Thomas, 22391 Hamburg (DE); SPRINZ, Uwe, 21698 Harsefeld (DE); MEYER, Hartmut, 21401 Thomasburg (DE); BOCK, Uwe, 21680 Stade (DE); KNABBE, Jörn, 21709 Düdenbüttel (DE); KOEBERER, Günther, 22119 Hamburg (DE)
(74) Vertreter: Glawe, Delfs, Moll
(86) Internationale Anmeldenummer: PCT/EP2007/007102
(87) Internationale Veröffentlichungsnummer: WO 2008/017500

(56) Entgegenhaltungen:
- EP-A- 1 475 594

## Beschreibung

Die Erfindung betrifft eine Vorrichtung zum Kühlen von Schüttgut mit einem Gas, die einen eine Schicht des Schüttguts von einem Aufgabeende in einer Förderrichtung zu einem Abgabeende fördernden, von Kühlgas durchströmten Rost aufweist, wobei der Rost mehrere in Förderrichtung wechselnd vor- und zurückbewegte Planken umfasst, und eine Abdichteinrichtung zwischen benachbarten Planken vorgesehen ist, die zwei voneinander getrennte Dichteinrichtungen umfasst.

Derartige Kühlvorrichtungen dienen dazu, Schüttgut durch Gas zu kühlen, indem das Schüttgut als Bett auf einen Rost aufgebracht und längs diesem transportiert wird, während zum Kühlen Gas von unterhalb des Rostes zugeführt wird. Das Gas steigt durch das Schüttgutbett und kühlt dieses dabei. Dem Kühlrost kommen bei derartigen Kühlvorrichtungen zwei Funktionen zu. Die eine Funktion ist das Stützen des Schüttguts zur Bildung eines Gutbetts, und die andere ist eine Transportfunktion zum Fördern des Schüttguts von einem Aufgabeende zu einem Abgabeende. Zur Realisierung der beiden Funktionen sind verschiedene Grundbauarten bekannt geworden. Hier von Interesse ist die Bauart mit mehreren, sich in Förderrichtung erstreckenden Planken, die wechselweise vor- und zurückbewegt werden. Bei diesem auch als "walking floor" bezeichneten Förderprinzip besteht eine Schwierigkeit darin, dass an den Grenzen zwischen benachbarten Planken Schüttgut in einen Rostunterraum durchfällt. Dieser Durchfall des Schüttguts stellt bei Kühlern, anders als bei vergleichbaren Rosten von Brennöfen, ein erhebliches Problem dar. Denn das durchgefallene Schüttgut sammelt sich im Rostunterraum eines Kühlers stetig an, während es im Rostunterraum eines Brenners in der Regel verbrennt und so von selbst verschwindet. Das Ansammeln von durch den Rost gefallenem Schüttgut ist unerwünscht, und führt zu Verschleiß und schließlich einer Beschädigung von Komponenten der Kühlvorrichtung. Besonders problematisch ist hierbei die Bauart mit den längsbewegten Planken deshalb, da es hierbei sowohl zu einer Gleichbewegung zwischen den benachbarten Planken wie auch zu einer Gegenbewegung kommen kann, die beide zuverlässig abgedichtet werden müssen. Dies erwies sich als schwierig. Zur Lösung dieser Schwierigkeit sind der Praxis verschiedene Ansätze vorgeschlagen worden.

Aus der EP-B-0 730 722 ist eine Dichtung bekannt, die als Seitendichtung zwischen den äußeren bewegten Planken und einer Umwandung des Kühlrosts wirkt. Sie weist einen Sperrluftkanal auf, über den Sperrluft in eine die äußere Kante der Planken umfassende Spaltdichtung geblasen wird. Diese Anordnung fordert einen recht hohen Gasstrom und damit einen entsprechend groß dimensionierten Kanal für die Zuführung, so dass sie sich nur zur Anwendung am Rand der äußeren Planken und nicht zwischen den Planken eignet.

Aus der WO-A-98/48231 ist eine Dichtungsbauart bekannt, bei der die nebeneinander angeordneten beweglichen Planken an ihren einander zugewandten Längskanten eine senkrecht nach oben stehende hochgezogene Wange aufweisen. Diese ist von einem gemeinsamen, nach unten zum Rost hin offenen U-förmigen Profil überdeckt. Ein Nachteil dieser Anordnung ist, dass die Dichtung in einem Bereich angeordnet ist, der vollständig von Schüttgut umgeben ist. Die Dichtung weist zwar einen langen Dichtspalt auf, jedoch ist er so angeordnet, dass die Schwerkraft ein Durchfallen des Materials begünstigt.

Aus der EP-A-1 475 594 ist wiederum eine Dichtungsanordnung bekannt, die im Grundsatz ähnlich aufgebaut ist wie die vorstehend beschriebene. Die Dichtungsanordnung weist zusätzlich zu der Dichtung an der Oberseite eine spiegelbildlich an der Unterseite angeordnete zweite Dichtung auf, die mit einem nach oben offenen U-förmigen Profil gebildet ist. Damit wird zwar eine recht gute Dichtwirkung erreicht, aber ein Problem besteht darin, dass einmal in die Dichtanordnung eingetretenes Material nur schwer wieder zurückgeführt werden kann. Es kann sich ansammeln und so die Wirkung der Dichtanordnung beeinträchtigen.

Ausgehend von der zuletzt genannten, bekannten Dichtungsanordnung liegt der Erfindung die Aufgabe zugrunde, eine verbesserte Dichtanordnung zu schaffen, die den Rostdurchfall weiter verringert.

Die Lösung liegt in einer Dichtanordnung mit den Merkmalen des unabhängigen Anspruchs. Vorteilhafte Weiterbildungen sind Gegenstand der abhängigen Ansprüche.

Bei einer Vorrichtung zum Kühlen von Schüttgut mit einem Gas, die einen eine Schüttgutschicht von einem Aufgabeende in eine Förderrichtung zu einem Abgabeende befördernden, von Kühlgas durchströmten Rost aufweist, wobei der Rost mehrere in Förderrichtung wechselnd vor- und zurückbewegte Planken umfasst, und eine Abdichteinrichtung zwischen benachbarten Planken mit zwei räumlich voneinander getrennten Dichteinrichtungen vorgesehen ist, ist gemäß der Erfindung vorgesehen, dass die Abdichteinrichtung weiter einen längs der Planken laufenden Förderkanal zwischen den Dichteinrichtungen aufweist, an dem mindestens eine Gaszufuhr für einen längs des Förderkanals strömenden Gasstrom derart ausgebildet ist, um durch eines der Dichtpakte eingetragenes Schüttgut zu einer Abgabestelle zu befördern.

Nachfolgend werden einige verwendete Begriffe erläutert.

Unter Schüttgut wird Pulver- oder körniges Material verstanden, insbesondere Klinkermaterial.

Eine Förderrichtung ist die Richtung in der Ebene des Rostes, längs der auf dem Rost befindliches Schüttgut vom Aufgabeende zum Abgabeende transportiert wird.

Unter wechselnd vor- und zurückbewegten Planken werden brettartige langgestreckte Gebilde verstanden, die entlang ihrer Längsrichtung vor- und auch wieder zurückbewegt werden. Die Bewegung ist dabei in der Regel so gesteuert, dass sich mehrere Planken gleichzeitig vorwärts bewegen, aber ungleichzeitig zurück. Damit kann eine Förderwirkung erzielt werden, wodurch gesonderte Fördereinrichtungen auf dem Rost entbehrlich sind.

Unter einem Förderkanal wird eine Leitung verstanden, die sowohl zum Transport von Gas wie auch von durchgefallenem Schüttgutmaterial geeignet ist.

Mit äußerer Dichteinrichtung ist diejenige Dichteinrichtung gemeint, welche den Förderkanal von der Schüttgutschicht trennt. Die innere Dichteinrichtung trennt den Förderkanal vom Rostunterraum.

Die Erfindung beruht auf der Kombination zweier Effekte. Zum einen wird durch die doppelten Dichteinrichtungen die Menge des durchfallenden Materials verringert. Zum anderen soll das Material, welches die erste Dichteinrichtung überwunden hat, kontrolliert abgeführt werden, bevor es zur zweiten Dichteinrichtung gelangen kann. Ein Großteil des eingedrungenen Schüttgutmaterials (nachfolgend als Fehlmaterial bezeichnet) kann somit abgeführt werden, bevor es überbaupt mit der zweiten Dichteinrichtung in Kontakt kommt. Die Wahrscheinlichkeit, dass Material auch noch die zweite Dichteinrichtung durchquert und in den Rostunterraum gelangt, ist dadurch erheblich verringert. Damit ist auch der Verschleiß der zweiten Dichteinrichtung auf ein Minimum reduziert, sodass die Dichtwirkung lange erhalten bleibt. Schließlich werden dank des erfindungsgemäßen Förderkanals auch Ansammlungen von Fehlmaterial verhindert. Die Dichteinrichtungen bleiben frei und werden vor Beschädigung und Verschleiß geschützt.

Es ist grundsätzlich möglich, das über den Förderkanal abgeführte Fehlmaterial zu einer beliebigen Stelle abzuführen. Zweckmäßig ist es aber, die Abgabestelle des Förderkanals am Abgabeende anzuordnen. Das abtransportierte Fehlmaterial fällt dann an der Stelle ab, an der auch das gekühlte Material vom Rost abgeworfen wird. Es ist aber nicht absolut zwingend, eine gesonderte Abgabestelle vorzusehen. Sie kann auch in die äußere Dichteinrichtung integriert sein. Hierzu bietet sich insbesondere der in Förderrichtung hinten gelegene Bereich des Kühlrosts an. Dort kann bei ausreichendem Gasdruck im Förderkanal eine Ausblasung des eingetragenen Fehlmaterials zurück in das Schüttgutbett erfolgen.

Häufig ist der Rostunterraum in mehrere Kammern unterteilt, die in Förderrichtung gesehen mit unterschiedlichem Druck beaufschlagt sein können. Die Erfindung kann sich dies mit Vorteil zunutze machen, indem sie als Gasquelle für den Förderkanal wenigstens eine Verbindung mit einer der Kammern vorsieht, die einen höheren Druck als andere Kammern aufweist. Unter höherem Druck ist hierbei zu verstehen, dass er zur Generierung eines Druckgefälles zum Transport des Fehlmaterials im Förderkanal ausreicht. Der Förderkanal selbst ist zweckmäßigerweise nicht in Kammern unterteilt, sondern kammerfrei. Dies gewährleistet einen ungehinderten Abtransport des Fehlmaterials.

Die äußere und innere Dichteinrichtung kann vorzugsweise als Spalt-Labyrinthdichtung gebildet sein. Diese Dichtungsausführung ist an sich für derartige Kühler bekannt und hat sich bewährt. Sie ist im Gegensatz zu auf Kontakt basierenden Dichtungen verschleißarm; sie weist aber eine höhere Leckagerate auf. Dank der erfindungsgemäßen Anordnung mit dem Förderkanal vergrößert sich der Rostdurchfall aber gerade nicht. Die Erfindung versteht es, Leckagerate und Rostdurchfall-Menge zu entkoppeln. Zweckmäßigerweise ist mindestens eine der Dichteinrichtungen selbsteinstellend ausgeführt. Sie sind vorzugsweise so beschaffen, dass das Sollmaß des Dichtspalts bei der Herstellung auf 0 mm reduziert und.dass im Betrieb (aufgrund von Fertigungstoleranzen, unterschiedlichen Biegelinien der die Dichteinrichtung tragenden Komponenten etc.) rasch ein gewünschtes Spaltmaß entsteht, welches bis zum Austausch der Dichteinrichtung bestehen bleibt. Es wird also ein bewusster Verschleiß erzeugt, und zwar bis auf ein gewünschtes Ziel-Spaltmaß. Mit einem solchen Einlaufprozess kann im Ergebnis das Ziel-Spaltmaß genauer eingestellt werden, als dies bei einer direkten Herstellung möglich wäre.

Zweckmäßig ist es, wenn die äußere Dichteinrichtung tiefer als die innere Dichteinrichtung angeordnet ist. Damit wirkt die Schwerkraft einem Durchtritt von Fehlmaterial von der äußeren Dichteinrichtung durch den Förderkanal hindurch zur inneren Dichteinrichtung zusätzlich entgegen.

Vorzugsweise weist die Abdichteinrichtung eine vorstehende Leiste an einer Längskante einer der Planken und ein die Leiste übergreifendes Schenkelprofil an einer der benachbarten Planken auf. Damit kann auf einfache Weise eine Spaltdichtung realisiert werden, die als äußere Dichteinrichtung fungiert. Sie ist bei nach unten offener Anordnung des Schenkelprofils auch weitgehend vor dem Eintrag von Schüttgutmaterial geschützt. Zweckmäßigerweise ist vorgesehen, dass ein freies Ende des Schenkelprofils mit der Leiste zusammenwirkt. Die Leiste kann einen rechteckigen Querschnitt aufweisen. Vorzugsweise weist sie aber eine Stufe auf, deren Flanken eine Labyrinthdichtung mit dem freien Ende des Schenkelprofils bilden. Damit wird eine noch bessere Abdichtwirkung erreicht. Weiter ist vorzugsweise vorgesehen, dass das Schenkelprofil einen zusätzlichen Schenkel aufweist, um so ein U-förmiges Profil zu bilden. Jener ist an einer an der benachbarten Planke angeordneten aufragenden Wange befestigt, um so eine Abdichtung auch zu der benachbarten Planke zu erreichen.

Vorzugsweise ist an der benachbarten Planke eine Zusatzleiste angeordnet, die mit der Leiste eine Spaltdichtung als innere Dichteinrichtung bildet. Damit wird erreicht, dass die Leiste nicht nur zur Bildung der äußeren Dichteinrichtung, sondern auch zur Bildung der inneren Dichteinrichtung herangezogen werden kann. Die Zahl der benötigten Teile ist dadurch minimiert. Zweckmäßigerweise ist dabei die Zusatzleiste als ein L-förmiges Profil ausgebildet. Besonders bevorzugt ist es, wenn die Zusatzleiste in einem hochstehenden Element der benachbarten Planke so angeordnet ist, dass die von ihr gebildete innere Dichteinrichtung höher angeordnet ist als die äußere Dichteinrichtung. Damit wirkt die Schwerkraft einem Transport des Fehlmaterials von der äußeren zur inneren Dichteinrichtung entgegen. Das vorstehend erwähnte hochstehende Element kann vorzugsweise durch die aufragende Wange gebildet sein.

Es ist zweckmäßig, wenn an den einander gegenüberliegenden Längsseiten benachbarter Planken nach unten abragende Endplatten vorgesehen sind und einen Gaskanal bilden, der über die innere Dichteinrichtung in den Förderkanal mündet. Dabei ist der Förderkanal zweckmäßigerweise so gestaltet, dass er einen Querschnitt aufweist, der etwa 10 bis 80 mal, vorzugsweise 15 bis 50 mal, so groß ist wie der der Dichteinrichtungen.

Vorzugsweise ist die innere Dichteinrichtung derart ausgelegt, dass ihr Strömungswiderstand kleiner ist als der der äußeren Dichteinrichtung. Dadurch wird erreicht, dass das in dem Förderkanal strömende Gas nicht rückwärts durch die äußere Dichteinrichtung zurück in das Schüttgutbett strömt. Der Gefahr von Verstopfungen der äußeren Dichteinrichtung durch rückgeführtes Fehlmaterial wird dadurch entgegengewirkt, führt. Bewährt hat sich ein Verhältnis von beispielsweise 1:2 bis 1:50.

Es kann zweckmäßig sein, die innere Dichteinrichtung zwischen einer Innenfläche des Schenkelprofils und einer an der Leiste angeordneten Zusatzplatte auszubilden. Die innere Dichteinrichtung befindet sich dadurch hoch in dem Förderkanal. Eingedrungenes Fehlmaterial kann sie kaum erreichen. Sie ist damit vor Verschleiß gut geschützt. Außerdem ist diese Anordnung robust gegenüber ungünstigen Toleranzen oder durch Biegebelastungen vergrößertem Dichtspalt: Auch in solchen Fällen würde Materialdurchfall nicht oder nur in sehr geringem Umfang auftreten.

Die Erfindung wird nachfolgend unter Bezug auf die beigefügte Zeichnung näher erläutert, in der ein vorteilhaftes Ausführungsbeispiels der Erfindung dargestellt ist. Es zeigen:
- Fig. 1: eine schematische Seitenansicht einer Kühlvorrichtung gemäß einem Ausführungsbeispiel der Erfindung;
- Fig. 2: Schemaansichten unterschiedlicher Funktionsstadien eines Rosts der Kühlvorrichtung;
- Fig. 3: eine Querschnittsansicht durch einen Teil der Kühlvorrichtung;
- Fig. 4: eine Querschnittsansicht einer ersten Ausführungsform für eine erfindungsgemäße Dichtungsanordnung;
- Fig. 5: eine Querschnittsansicht einer zweiten Ausführungsform für eine erfindungsgemäße Dichtungsanordnung;
- Fig. 6: eine Querschnittsansicht einer dritten Ausführungsform für eine erfindungsgemäße Dichtungsanordnung; und
- Fig. 7: eine vergrößerte Teil-Querschnittsansicht einer vierten Ausführungsform für eine erfindungsgemäße Dichtungsanordnung.

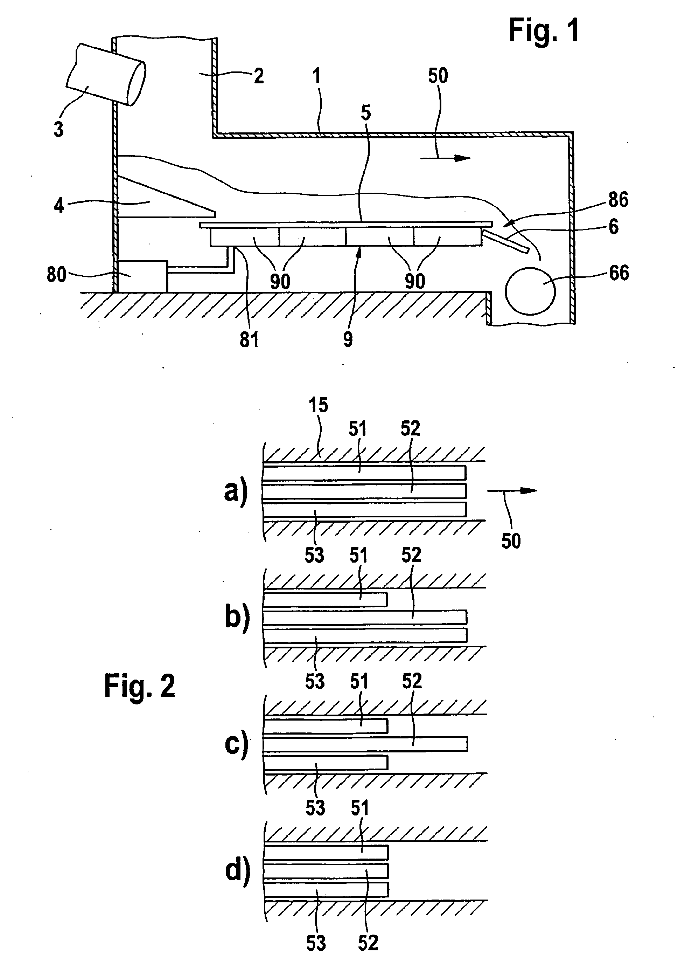

In Fig. 1 ist eine schematisierte Ansicht einer Kühlvorrichtung und ihre Einordnung in eine Kühlanlage dargestellt. In einem Kühlergehäuse 1 befindet sich am Anfang ein Aufgabeschacht 2, in dem ein Auswerfrohr 3 eines vorgeschalteten Drehrohrofens (nicht dargestellt) mündet. Vom Drehrohrofen kommendes Gut fällt in den Aufgabeschacht 2 auf einen Kühlrost, genauer gesagt auf dessen Aufgabeende 4. Es weist eine leicht abfallende rampenförmige Gestaltung auf, so dass das aufgebrachte Gut in Richtung zu einem horizontal angeordneten Hauptabschnitt des Rostes rutscht. Wenn nachfolgend von dem Rost ohne nähere Angabe gesprochen wird, so ist dieser Hauptabschnitt 5 des Kühlrosts gemeint. Er weist mehrere in Längsrichtung bewegliche Planken 51-53 auf, die eine Förderwirkung auf das Gut derart ausüben, dass es von dem Aufgabeende 4 weg und entlang des Rostes 5 geführt wird. An den gegenüberliegenden Enden weist der Rost ein Abgabeende 6 auf, dass in dem Ausführungsbeispiel als eine geneigte Rutschplatte ausgebildet ist. Sie dient dazu, das Kühlgut am Abgabeende gezielt abzuwerfen, beispielsweise auf einen darunter angeordneten Brecher 66.

Der Aufbau des Rostes 5 in einer schematisierten Darstellung und seine Funktionsweise sind in Fig. 2 dargestellt. Er besteht, wie bereits gesagt, aus mehreren nebeneinander angeordneten langgestreckten Planken 51-53. Das Funktionsprinzip zum Transport des Schüttguts in eine Förderrichtung 50 ist mit seinen wesentlichen Phasen in den einzelnen Abbildungen der Figur dargestellt. Grundprinzip dieses Ausführungsbeispiels ist eine Bewegungsfolge, bei der sich sämtliche Planken 51-53 in Förderrichtung 50 bewegen. In Fig. 2a ist eine Phase des Zyklus abgebildet, worin die Planken 51-53 in ihre vordere Endstellung bewegt werden. Die nächste Phase ist in Fig. 2b dargestellt. Die Planke 51 wird zurückgezogen, bis sie ihre hintere Endstellung erreicht. Für die in Fig. 2c dargestellte Phase bewegt sich die Planke 53 zurück, bis sie ihre hintere Endstellung erreicht. Schließlich bewegt sich auch die Planke 52 in ihre hintere Endstellung, so dass die in Fig. 2d dargestellte Stellung erreicht wird. Der Zyklus beginnt dann von neuem. Auf diese Weise entsteht ein Bewegungsmuster, bei dem alle Planken gemeinsam nach vorne bewegt werden, während sie einzeln nacheinander zurückgezogen werden. Es sei angemerkt, dass es nicht unbedingt erforderlich ist, dass sämtliche sich vorwärts bewegenden Planken dieselbe Geschwindigkeit aufweisen. Es kann in Übereinstimmung mit dem sich in üblicher Weise einstellenden Geschwindigkeitsprofil des Schüttguts auch vorgesehen sein, dass sich die randnahen Planken 51, 53 langsamer bewegen als die mittig angeordnete Planke 52.

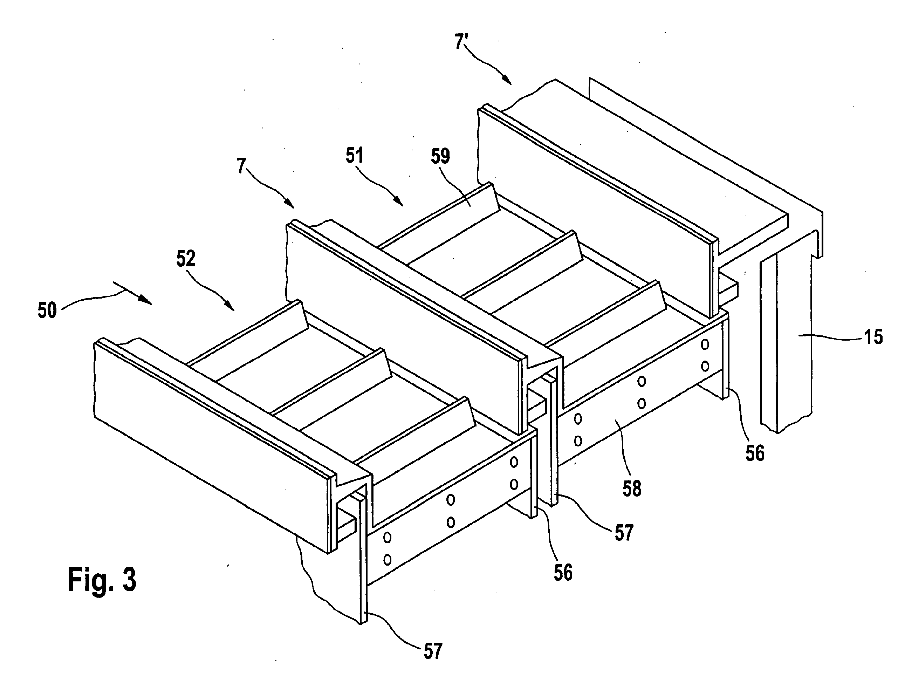

In Fig. 3 ist eine Querschnittsdarstellung über einen Teil der Rostbreite gemäß dem Ausführungsbeispiel der Erfindung gezeigt. Am rechten Bildrand ist eine Seitenwand 15 für den Rost dargestellt. Die Seitenwand 15 kann als eine eigenständige Wandung ausgeführt sein, die den Rost zur Seite hin abgrenzt. Sie kann aber auch kombiniert mit einer Seitenwand des Gehäuses 1 ausgeführt sein, wobei dann die Seitenwand 15 eine konsolenartige Hervorstehung an der Seitenwand des Rostraums bildet. Jeweils nach links nacheinander angeordnet sind die erste Planke 51 und die zweite Planke 52; weitere sich anschließende Planken sind aus Vereinfachungsgründen nicht dargestellt. Für ihren Aufbau gilt aber Entsprechendes. Die Planken 51, 52 weisen an ihrer Oberfläche mehrere gleichmäßig beabstandete Rippen 59 auf, die quer zur Förderrichtung 50 orientiert sind. Sie dienen dazu, den Reibschluss zwischen den Planken 51, 52 unter dem aufliegenden Schüttgut zu verbessern. Ferner bilden sie zwischen sich Taschen, die mit Schüttgut aufgefüllt sind. Damit ist die Oberfläche der Planken 51, 52 nicht direkt mit dem heißen Schüttgut beaufschlagt und so vor schädlichen Einwirkungen aufgrund von Hitze und Abrasion durch das heiße Schüttgut geschützt. An ihrer Stirnseite weisen die Planken 51, 52 Trennwände 58 auf. An den Längskanten der Planken 51, 52 erstrecken sich jeweils nach unten abragende Endplatten 56, 57. Zwischen den Hauptflächen gegenüberliegender Endplatten 56, 57 benachbarter Planken 51, 52 kann ein Gaszufuhrkanal gebildet sein. Dies wird näher noch später erläutert werden. Die Trennwände 58 sind vorzugsweise mehrfach in regelmäßigen Abständen längs der Planken 51, 52 angeordnet. Dadurch sind zusammen mit den Endplatten 56, 57 Kammern 90 am Rost 5 gebildet, die mit Druckgas beaufschlagt werden können. Es ist dabei möglich, die einzelnen Kammern 90 mit verschiedenen Drücken zu beaufschlagen, um so eine gewünschte Verteilung des Druckgases längs der Erstreckung des Rosts 5 zu erreichen.

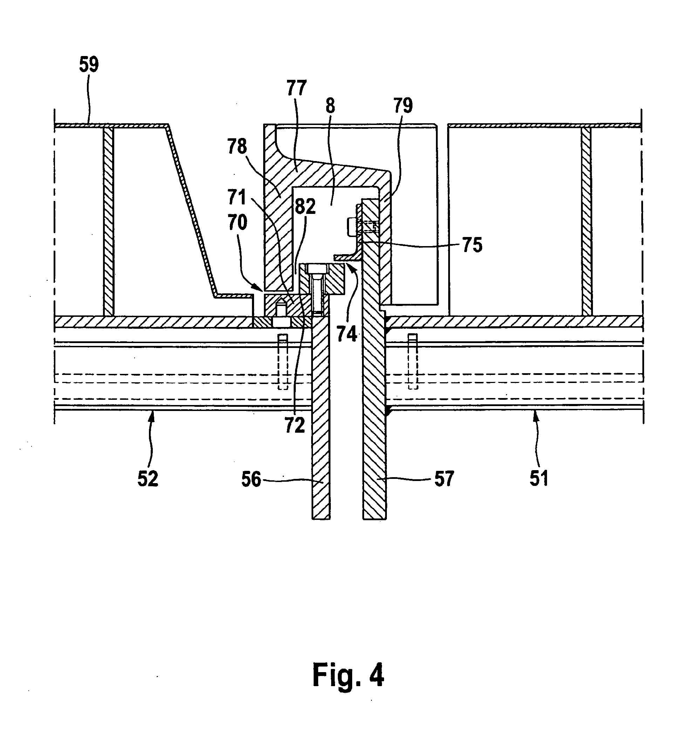

Zwischen benachbarten Planken 51, 52 ist jeweils eine sich entlang der Längskanten erstreckende Abdichteinrichtung.7 vorgesehen. Zur Abdichtung der rand-nächsten Planke 51 mit der Wandung 15 ist eine modifizierte Abdichteinrichtung 7' vorgesehen. Der Aufbau und die Funktionsweise der Abdichteinrichtung 7 werden nachfolgend unter Bezugnahme auf Fig. 4 näher erläutert. Die Abdichteinrichtung 7 umfasst im wesentlichen eine Leiste 71 und ein diese übergreifendes Schenkelprofil 77. Die Leiste 71 ist über einen Befestigungsadapter an der Oberkante einer der Planken 51 angeordnet. Die Leiste weist ein im Wesentlichen rechteckiges Profil auf und erstreckt sich über die gesamte Länge der Planke 51. Sie schließt zur Außenseite hin bündig mit der Außenfläche der Endplatte 56 der Planke 51 ab. An ihrer gegenüberliegenden, zur Rippe 59 hin orientierten Seite weist die Leiste 71 vorzugsweise eine Stufe 72 auf. Die Stufe 72 kann besonders einfach durch eine zweiteilige Ausführung der Leiste 71 gebildet sein, bei der zwei im Querschnitt rechteckförmige Leistenelemente versetzt zueinander angeordnet sind. Die Stufe 72 dient dazu, mit dem Schenkelprofil 77 zusammenzuwirken.

Das Schenkelprofil 77 ist von einer generell U-förmigen Gestalt. Es umfasst einen Hauptschenkel 78 und einen Zusatzschenkel 79, die über ein Zwischenstück verbunden sind. Vorzugsweise sind der Hauptschenkel 78, das zwischenstück sowie der Zusatzschenkel 79 einteilig ausgeführt. Das Schenkelprofil 77 ist an der Endplatte 57 der benachbarten Planke 51 angeordnet. Die Abmessungen sind dabei so gewählt, dass es mit einem Hauptschenkel 78 die Leiste 71 derart übergreift, dass der Hauptschenkel 78 mit seinem freien Ende in die Stufe 72 der Leiste 71 fasst. Dabei schließt die Außenseite des Hauptschenkels 78 bündig mit der zur Rippe 59 weisenden Außenseite der Leiste 71 ab. Zwischen der Leiste 71 und dem freien Ende des Hauptschenkels 78 ist eine Spaltdichtung gebildet, die als äußere Dichteinrichtung 70 fungiert. Aufgrund des Eingriffs des freien Endes in die Stufe 72 weist der Spalt der äußeren Dichteinrichtung 70 einen 90° Knick auf. Sie stellt damit eine Labyrinthdichtung dar.

Weiter ist eine innere Dichteinrichtung 74 vorgesehen. Dazu ist an dem Zusatzschenkel 79 eine Zusatzleiste 75 angeordnet. Diese Zusatzleiste 75 weist einen L-förmigen Querschnitt auf. Mit ihrem längeren Schenkel ist sie an dem Zusatzschenkel 79 befestigt, und ihr kürzerer freier Schenkel ragt senkrecht dazu in Richtung auf die Leiste 71 ab. Es sei angemerkt, dass die Zusatzleiste 75 nicht unbedingt direkt auf dem Zusatzschenkel 79 angeordnet zu sein braucht. Dargestellt in Fig. 4 ist eine bevorzugte Variante, bei der der Zusatzschenkel 79 einen wangenartig nach oben überstehenden Abschnitt der Endplatte 57 hintergreift und die Zusatzleiste 75 entsprechend auf diesem Wangen-Bereich der Endplatte 57 angeordnet ist. Die Zusatzleiste 75 wirkt mit ihrem abragenden Schenkel vorzugsweise mit der Oberseite der Leiste 71 derart zusammen, dass zwischen ihnen ein Spalt gebildet ist. Dieser fungiert als Dichtspalt der inneren Dichteinrichtung 74. Der Dichtspalt der äußeren Dichteinrichtung 70 weist zum Beispiel eine Weite von 2 mm auf. Der Dichtspalt der inneren Dichteinrichtung 74 kann etwa gleich groß sein, ist zweckmäßigerweise aber so bemessen, dass der Durchströmungswiderstand der inneren Dichteinrichtung 74 kleiner ist als derjenige der äußeren Dichteinrichtung. Beispielsweise hat der Dichtspalt der äußeren Dichteinrichtung 70 einen Querschnitt von 0,5 cm² bei einem Spalt von 2 mm, und die innere Dichteinrichtung einen Querschnitt von 0,2 cm² bei einem Spalt von ebenfalls 2 mm.

Die äußere Dichteinrichtung 70 und die innere Dichteinrichtung 74 begrenzen einen von dem Schenkelprofil 77 eingefassten Förderkanal 8. Dazu bildet das Schenkelprofil 77 mit der Leiste 71 und einem hervorstehenden Teil der Endplatte 57 einen Gasraum mit etwa rechteckigem Querschnitt. Der Förderkanal 8 steht über einen schmalen Zwischenraum 82 und die äußere Dichteinrichtung 70 in Verbindung mit der Oberseite der Rostplanke 51, also mit der Oberseite des Rosts 5. Weiter steht der Förderkanal 8 in Verbindung mit einem Zwischenraum, der zwischen den einander zugewandten Oberflächen der benachbarten Endplatten 56, 57 gebildet ist. Er bildet eine Verbindung mit dem Rostunterraum 9. Die Dichteiririchtungen 70, 74 sind dank ihrer Ausführung als Spaltdichtungen, gegebenenfalls als Labyrinthdichtungen, umempfindlich gegenüber Verschleiß und gewährleisten ihre Dichtigkeit auch bei einer relativen Längsbewegung der benachbarten Planken 51, 52 zueinander. Eine solche Längsbewegung ist ohne Einfluss auf die Dichtigkeit.

Der Förderkanal 8 dient dazu, eingedrungenes Fehlmaterial abzuführen. Dazu kann an dem aufgabeseitigen Ende des Rosts 5 eine Treibgasquelle 80 vorgesehen sein. Sie führt über einen entsprechenden Treibgasanschluss 81 ein Gas zu, welches entlang dem Förderkanal 8 zum abgabeseitigen Ende 6 strömt, und dort mündet. Damit wird bewirkt, dass eventuell eingetretenes Fehlmaterial, das durch die äußere Dichteinrichtung 70 in den Förderkanal 8 eintritt, entlang diesem zu einer am Abgabeende 6 angeordneten Abgabestelle 86 abtransportiert wird, bevor es die innere Dichteinrichtung 74 erreicht oder diese gar durchqueren und so den Rostunterraum 9 erreichen könnte. Damit kann dank der Abförderung in den Förderkanal 8 die Menge des schließlich den Rostunterraum 9 erreichenden Fehlmaterials erheblich reduziert werden. Der Förderkanal 8 weist beispielsweise bei oben genannten Abmessungen der Dichteinrichtungen 70, 74 einen Querschnitt von 32,5 cm² auf.

Es ist nicht unbedingt erforderlich, dass das zur Förderung in dem Förderkanal 8 benötigte Treibgas über einen gesonderten Treibgasanschluss 81 von einer gesonderten Treibgasquelle 80 zugeführt wird. Es kann auch vorgesehen sein, das Treibgas über den Zwischenraum zwischen den Endplatten 56 und 57 zuzuführen, und zwar vorzugsweise im Bereich des Aufgabeendes 4. Damit ergibt sich eine (gewollte) Gasströmung durch die innere Dichteinrichtung 74 derart, dass das Gas in den Förderkanal 8 strömt. Damit wird schon aufgrund dieses Einströmens einem Durchtreten von Fehlmaterial aus dem Förderkanal 8 durch die innere Dichteinrichtung 74 entgegengewirkt.

Häufig ist vorgesehen, dass der Rostunterraum 9 in verschiedene Kammern unterteilt ist. Dementsprechend kann auch der Förderkanal 8 in Kammern unterteilt sein. Unbedingt nötig ist dies aber nicht. Es kann auch vorgesehen sein, dass der Förderkanal 8 durchgehend ist, während der Rostunterraum 9 in Kammern unterteilt ist. Wichtig ist, dass die Zuführung des Treibgases derart gewählt ist, dass entlang der gesamten Länge des Förderkanals 8 ein ausreichendes (positives) Druckgefälle zwischen dem Druck im Kanal 8 und oberhalb des Rosts 5 an der jeweiligen Stelle gegeben ist.

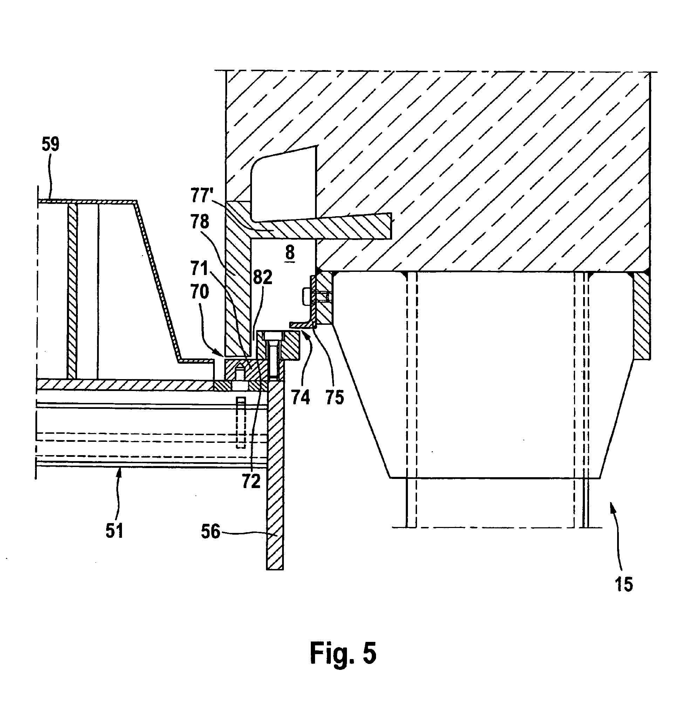

In entsprechender Weise ist die Abdichteinrichtung 7' ausgebildet. Wie in Fig. 5 dargestellt ist, ist ebenso eine äußere Dichteinrichtung 70 und eine innere Dichteinrichtung 74 gebildet durch eine Stufe 72 an der Leiste 71 beziehungsweise zwischen der Leiste 71 und der Zusatzleiste 75. Der Unterschied liegt darin, dass das Schenkelprofil 77' keinen Zusatzschenkel 79 aufweist, sondern fest mit der Seitenwand 15 verbunden ist. Der Vorteil dieser Konstruktion ist, dass sämtliche an der Bildung der Dichtung beteiligten Elemente, einschließlich des Hauptschenkels 78 des Schenkelprofils 77', genauso beschaffen sein können wie bei der Abdichteinrichtung 7 zwischen den benachbarten Planken 51, 52. Die Abdichteinrichtung 7' erreicht so die gleiche vorteilhafte Dichtwirkung.

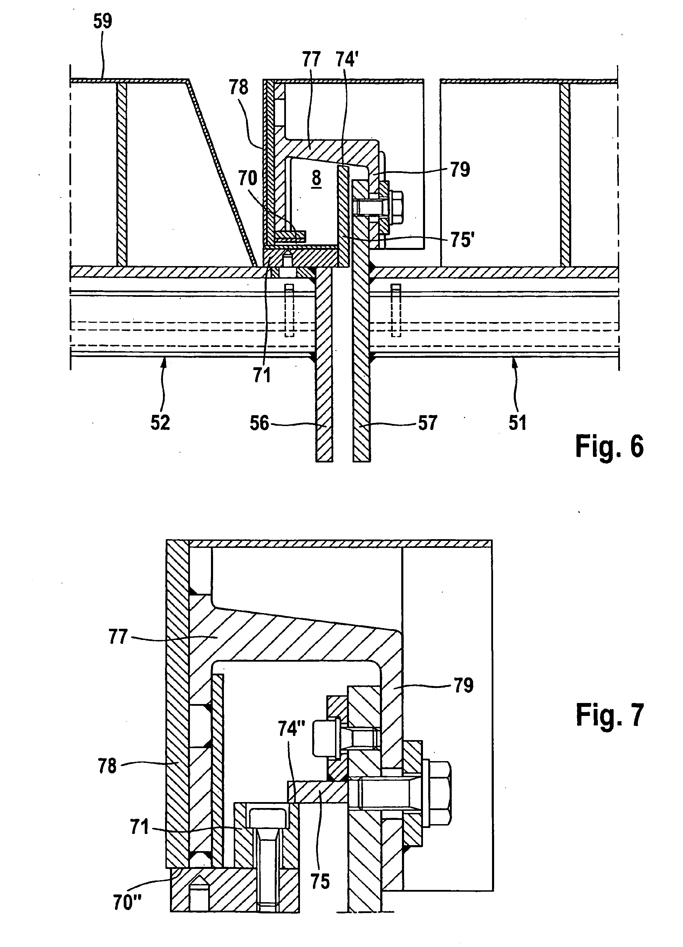

Die in Fig. 6 dargestellte dritte Ausführungsform unterscheidet sich von der in Fig. 4 dargestellten ersten Ausführungsform im Wesentlichen durch eine andere Anordnung der inneren Dichteinrichtung 74'. Dieser Unterschied wird nachfolgend näher erläutert; im Übrigen gelten die zu Fig. 1 gegebenen Erläuterungen sinngemäß. Bei der ersten Ausführungsform ist die innere Dichteinrichtung 74 gebildet zwischen der Leiste 71 und einer Zusatzleiste 75, die im unteren Bereich des Förderkanals 8 angeordnet sind. Bei der dritten Ausführungsform ist die innere Dichteinrichtung 74' gebildet zwischen einer Innenfläche des Schenkelprofils 77 und einer Zusatzplatte 75', die an der Leiste 71 angeordnet ist. Die Zusatzplatte 75' ist rechtwinklig nach oben aufragend an dem zur Endplatte 57 weisenden Fläche der Leiste 71 angeordnet. Das obere Ende der Zusatzplatte 75' stößt auf die Innenfläche des Zwischenstücks des Schenkelprofils 77 und bildet so den Spalt der inneren Dichteinrichtung 74'. In den Förderkanal 8 gelangtes Fehlmaterial tritt wegen seiner gegenüber dem Treibgas größeren spezifischen Dichte hauptsächlich im unteren Bereich des Förderkanals 8 auf. Dadurch wird die innere Dichteinrichtung 74', dank ihrer hoch liegenden Anordnung an dem oberen Ende der Zusatzplatte 75', nur schwach oder gar nicht mit dem Fehlmaterial beaufschlagt. Der Verschleiß der inneren Dichteinrichtung'74' ist so auf ein nahezu vernachlässigbares Minimum reduziert. Außerdem hat diese Anordnung der inneren Dichteinrichtung 74' den Vorteil, dass selbst im Fall einer verschlissenen oder defekten Dichteinrichtung die Menge an Fehlmaterial, welche schließlich den Rostunterraum 9 erreicht, sehr gering ist. Diese Ausführungsform der Dichteinrichtung 74' ist damit nicht nur verschleißunempfindlich, sondern auch robust gegenüber ungünstigen Toleranzen oder durch Biegebelastungen vergrößertem Dichtspalt.

In Fig. 7 ist einer weitere Variante der ersten Ausführungsform dargestellt. Sie unterscheidet sich von ihr im wesentlichen dadurch, dass die Dichteinrichtungen 70", 74" selbsteinstellend ausgeführt sind. Das bedeutet, sie werden hergestellt mit einem Dichtspalt der Weite null (0 mm). Im Betrieb findet ein Einlaufen statt, im Zuge dessen Abrasion aufgrund von unvermeidlichen Fertigungstoleranzen oder unterschiedlichen Durchbiegungen der Komponenten auftritt, so dass sich verhältnismäßig rasch ein gewünschtes Spaltmaß (Ziel-Spaltmaß) einstellt, beispielsweise in Höhe von ca. 2 mm (vgl. Fig.. 4). Mit einer solchen Ausführung ist nicht nur eine rationellere Herstellung ermöglicht, sondern es wird ein selbsteinstellender Dichtspalt geschaffen, dessen Spaltmaß im Ergebnis näher am Ziel-Spaltmaß liegt als dies bei konventioneller direkter Herstellung wirtschaftlich machbar wäre.

## Patentansprüche

1. Vorrichtung zum Kühlen von Schüttgut mit einem Gas, die einen eine Schicht des Schüttguts von einem Aufgabeende (4) in eine Förderrichtung (50) zu einem Abgabeende (6) fördernden, von Kühlgas durchströmten Rost (5) aufweist, wobei der Rost (5) mehrere in Förderrichtung wechselnd vor- und zurückbewegte Planken (51-53) umfasst, und eine Abdichteinrichtung (7) zwischen benachbarten Planken (51-53) vorgesehen ist, die räumlich voneinander getrennte äußere und innere Dichteinrichtungen (70, 74) umfasst,
**dadurch gekennzeichnet, dass**
die Abdichteinrichtung (7) weiter einen längs der Planken (51-53) laufenden Förderkanal (8) zwischen den Dichteinrichtungen (74) aufweist, an dem mindestens eine Gaszufuhr ausgebildet ist zur Bewirkung eines Gasstroms längs des Förderkanals (8), um durch eine der Dichteinrichtungen (70, 74) eingetragenes Gutmaterial zu einer Abgabestelle (86) zu befördern.

2. Vorrichtung nach Anspruch 1,
**dadurch gekennzeichnet, dass**
die Abgabestelle (86) am Abgabeende (6) angeordnet ist.

3. Vorrichtung nach Anspruch 1,
**dadurch gekennzeichnet, dass**
die Abgabestelle (86) die äußere Dichteinrichtung (70) ist.

4. Vorrichtung nach einen der vorangehenden Ansprüche 1 bis 3,
**dadurch gekennzeichnet, dass**
der Rost (5) in Förderrichtung (50) in einen Unterraum (9) mit mehreren Kammern (90) unterteilt ist, die mit unterschiedlichem Gasdruck beaufschlagbar sind, wobei eine Treibgasquelle für den Förderkanal (8) durch eine Verbindung mit einer der Kammern (90) gebildet ist, die einen erhöhten Druck gegenüber dem Förderkanalausgang aufweist.

5. Vorrichtung nach Anspruch 4,
**dadurch gekennzeichnet, dass**
der Förderkanal (8) kammerfrei ist.

6. Vorrichtung nach einem der vorangehenden Ansprüche,
**dadurch gekennzeichnet, dass**
die äußere/oder innere Dichteinrichtung (70, 74) durch Spalt- oder Labyrinthdichtungen gebildet ist.

7. Vorrichtung nach Anspruch 6,
**dadurch gekennzeichnet, dass**
wenigstens eine der Dichteinrichtungen (70, 74) selbsteinstellend ausgeführt ist.

8. Vorrichtung nach einem der vorangehenden Ansprüche,
**dadurch gekennzeichnet, dass**
die äußere Dichteinrichtung (70) tiefer als die innere Dichteinrichtung (74) angeordnet ist.

9. Vorrichtung nach einem der vorangehenden Ansprüche,
**dadurch gekennzeichnet, dass**
die Abdichteinrichtung (7) eine vorstehende Leiste (71) an einer Längskante einer der Planken (51-53) und ein diese übergreifendes Schenkelprofil (77) an der benachbarten Planke (51-53) umfasst.

10. Vorrichtung nach Anspruch 9,
**dadurch gekennzeichnet, dass**
das Schenkelprofil (77) mit einem freien Ende eines seiner Schenkel (78) zusammen mit der Leiste (71) eine Spaltdichtung bildet, die als äußere Dichteinrichtung (70) fungiert.

11. Vorrichtung nach Anspruch 10,
**dadurch gekennzeichnet, dass**
die Leiste (71) eine Stufe (72) aufweist, deren Flanken eine Labyrinthdichtung mit dem freien Ende des genannten Schenkels (78) bilden.

12. Vorrichtung nach einem der Ansprüche 9 bis 11,
**dadurch gekennzeichnet, dass**
das Schenkelprofil (77) einen zusätzlichen Schenkel (79) zur Bildung eines U-förmigen Profils aufweist, der an einer an der benachbarten Planke (51-53) angeordneten hochstehende Wange befestigt ist.

13. Vorrichtung nach einem der Ansprüche 9 bis 12,
**dadurch gekennzeichnet, dass**
an der benachbarten Planke (51-53) eine Zusatzleiste (75) angeordnet ist, die mit der Leiste (71) eine Spaltdichtung bildet, die als innere Dichteinrichtung (74) fungiert.

14. Vorrichtung nach Anspruch 13,
**dadurch gekennzeichnet, dass**
die Zusatzleiste (75) als ein L-förmiges Profil ausgebildet ist.

15. Vorrichtung nach Anspruch 13 oder 14,
**dadurch gekennzeichnet, dass**
die Zusatzleiste (75) an einem hochstehenden Element der benachbarten Planken (51-53) so angeordnet ist, dass die innere Dichteinrichtung (74) höher als die äußere Dichteinrichtung (71) angeordnet ist.

16. Vorrichtung nach Anspruch 15,
**dadurch gekennzeichnet, dass**
das hochstehende Element durch die Wange (57) gebildet ist.

17. Vorrichtung nach einem der Ansprüche 9 bis 12,
**dadurch gekennzeichnet, dass**
die innere Dichteinrichtung (74') gebildet ist zwischen einer Innenfläche des Schenkelprofils (77) und einer an der Leiste (71) angeordneten Zusatzplatte (75').

18. Vorrichtung nach einem der vorangehenden Ansprüche,
**dadurch gekennzeichnet, dass**
nach unten abragende Endplatten (56, 57) an den einander gegenüberliegenden Längsseiten der benachbarten Planken (51-53) einen Gaskanal bilden, der über die innere Dichteinrichtung (74) in den Förderkanal (8) mündet.

19. Vorrichtung nach einem der vorangehenden Ansprüche,
**dadurch gekennzeichnet, dass**
der Förderkanal (8) einen Querschnitt aufweist, der 15 bis 50 mal so groß ist wie die Weite der Dichteinrichtungen (70, 74).

20. Vorrichtung der einem der vorangehenden Ansprüche,
**dadurch gekennzeichnet, dass**
die innere Dichteinrichtung (74) einen Strömungswiderstand aufweist, der kleiner ist als der der äußeren Dichteinrichtung (70).

21. Vorrichtung nach Anspruch 20,
**dadurch gekennzeichnet, dass**
der Strömungswiderstand um einen Faktor 2 bis 50 kleiner ist.

## Claims

1. Apparatus for cooling bulk material with a gas, which apparatus has a grate (5) which conveys a layer of the bulk material from a feed end (4) in a direction of conveyance (50) to a delivery end (6) and is flowed through by cooling gas, wherein the grate (5) comprises a plurality of planks (51-53) moved alternately forward and back in the direction of conveyance and, between adjoining planks (51-53), a sealing device (7) is provided, comprising two spatially separate sealing elements (70, 74),
**characterized in that**
the sealing device (7) also has between the sealing elements (74) a conveying duct (8), which runs along the length of the planks (51-53) and on which at least one gas supply is configured to produce a gas stream along the length of the conveying duct (8) in order to convey bulk material, introduced through one of the sealing elements (70, 74), to a delivery point (86).

2. Apparatus according to Claim 1, **characterized in that** the delivery point (86) is arranged at the delivery end (6).

3. Apparatus according to Claim 1, **characterized in that** the delivery point (86) is the outer sealing element (70).

4. Apparatus according to one of the preceding Claims 1 to 3, **characterized in that** the grate (5), in the direction of conveyance (50), is divided into a pit (9) having a plurality of chambers (90), which chambers can be subjected to different gas pressure, a propellant gas source for the conveying duct (8) being formed by a connection to one of the chambers (90), which chamber has an elevated pressure compared to the conveying duct outlet.

5. Apparatus according to Claim 4, **characterized in that** the conveying duct (8) is chamber-free.

6. Apparatus according to one of the preceding claims, **characterized in that** the outer and/or inner sealing element (70, 74) is formed by gap or labyrinth seals.

7. Apparatus according to Claim 6, **characterized in that** at least one of the sealing elements (70, 74) is made self-adjusting.

8. Apparatus according to one of the preceding claims, **characterized in that** the outer sealing element (70) is arranged lower than the inner sealing element (74).

9. Apparatus according to one of the preceding claims, **characterized in that** the sealing device (7) has a protruding bar (71) on a longitudinal edge of one of the planks (51-53) and a branched profile (77), reaching over the bar, on one of the adjoining planks (51-53).

10. Apparatus according to Claim 9, **characterized in that** the branched profile (77) forms with a free end of one of its branches (78), together with the bar (71), a gap seal acting as the outer sealing element (70).

11. Apparatus according to Claim 10, **characterized in that** the bar (71) has a step (72), the flanks of which form a labyrinth seal with the free end of said branch (78).

12. Apparatus according to one of Claims 9 to 11, **characterized in that** the branched profile (77) has an additional branch (79) to form a U-shaped profile, which branch is fastened to an upwardly projecting flange disposed on the adjoining plank (51-53).

13. Apparatus according to one of Claims 9 to 12, **characterized in that** on the adjoining plank (51-53) an auxiliary bar (75) is arranged, which forms with the bar (71) a gap seal acting as the inner sealing element (74).

14. Apparatus according to Claim 13, **characterized in that** the auxiliary bar (75) is configured as an L-shaped profile.

15. Apparatus according to Claim 13 or 14,
**characterized in that** the auxiliary bar (75) is disposed on an upright element of the adjoining plank (51-53) such that the inner sealing element (74) is arranged higher than the outer sealing element (71).

16. Apparatus according to Claim 15, **characterized in that** the upright element is formed by the flange (57).

17. Apparatus according to one of Claims 9 to 12, **characterized in that** the inner sealing element (74') is formed between an inner face of the branched profile (77) and an auxiliary plate (75') disposed on the bar (71).

18. Apparatus according to one of the preceding claims, **characterized in that** downwardly protruding end plates (56, 57) on the mutually opposing longitudinal sides of the adjoining planks (51-53) form a gas duct, which emerges via the inner sealing element (74) into the conveying duct (8).

19. Apparatus according to one of the preceding claims, **characterized in that** the conveying duct (8) has a cross section which is 15 to 50 times as large as the width of the sealing elements (70, 74).

20. Apparatus according to one of the preceding claims, **characterized in that** the inner sealing element (74) has a flow resistance which is less than that of the outer sealing element (70).

21. Apparatus according to Claim 20, **characterized in that** the flow resistance is less by a factor of 2 to 50 times.

## Revendications

1. Dispositif de refroidissement de matières en vrac avec un gaz, lequel comporte une grille (5) traversée par un gaz de refroidissement et transportant une couche de matières en vrac dans une direction de transport (50) depuis une extrémité d'admission (4) vers une extrémité d'évacuation (6), ladite grille (5) comportant plusieurs planches (51-53), déplacées en alternance vers l'avant et l'arrière dans la direction de transport (50), et un dispositif d'étanchéité (7) étant prévu entre des planches (51-53) adjacentes, lequel comporte des systèmes d'étanchéité (70, 74) extérieurs et intérieurs, séparés l'un de l'autre dans l'espace,
**caractérisé en ce que** le dispositif d'étanchéité (7) comporte en outre entre les systèmes d'étanchéité (74) un conduit de transport (8), qui s'étend le long des planches (51-53) et sur lequel est réalisé au moins une admission de gaz pour générer un flux de gaz le long du conduit de transport (8), afin de transporter un matériau introduit à travers l'un des systèmes d'étanchéité (70, 74) vers un point d'évacuation (86).

2. Dispositif selon la revendication 1, **caractérisé en ce que** le point d'évacuation (86) est disposé au niveau de l'extrémité d'évacuation (6).

3. Dispositif selon la revendication 1, **caractérisé en ce que** le point d'évacuation (86) est le système d'étanchéité extérieur (70).

4. Dispositif selon l'une quelconque des revendications précédentes 1 à 3, **caractérisé en ce que** la grille (5) est divisée dans la direction de transport (50) en un compartiment inférieur (9) avec plusieurs chambres (90), qui peuvent être sollicitées par une pression de gaz différente, une source de gaz de propulsion pour le conduit de transport (8) étant formée par une liaison avec une des chambres (90), dans laquelle règne une pression élevée par rapport à la sortie du conduit de transport.

5. Dispositif selon la revendication 4, **caractérisé en ce que** le conduit de transport (8) ne comporte pas de chambres.

6. Dispositif selon l'une quelconque des revendications précédentes, **caractérisé en ce que** le système d'étanchéité (70, 74) extérieur ou intérieur est formé par des joints d'étanchéité à fente ou des joints d'étanchéité en labyrinthe.

7. Dispositif selon la revendication 6, **caractérisé en ce qu'**au moins l'un des systèmes d'étanchéité (70, 74) est réalisé sous forme auto-ajustable.

8. Dispositif selon l'une quelconque des revendications précédentes, **caractérisé en ce que** le système d'étanchéité extérieur (70) est disposé plus bas que le système d'étanchéité intérieur (74).

9. Dispositif selon l'une quelconque des revendications précédentes, **caractérisé en ce que** le dispositif d'étanchéité (7) comporte une latte (71) saillante sur un bord longitudinal de l'une des planches (51-53) et, sur la planche (51-53) adjacente, un profilé à branches (77) s'engageant au-dessus de ladite latte.

10. Dispositif selon la revendication 9, **caractérisé en ce que** le profilé à branches (77) avec une extrémité libre de l'une de ses branches (78) forme conjointement avec la latte (71) un joint d'étanchéité à fente, qui fait fonction de système d'étanchéité extérieur (70).

11. Dispositif selon la revendication 10, **caractérisé en ce que** la latte (71) comporte un gradin (72), dont les flancs forment un joint d'étanchéité en labyrinthe avec l'extrémité libre de ladite branche (78).

12. Dispositif selon l'une quelconque des revendications 9 à 11, **caractérisé en ce que** le profilé à branches (77) comporte une branche (79) supplémentaire pour former un profilé en U, qui est fixé contre une joue verticale disposée sur la planche (51-53) adjacente.

13. Dispositif selon l'une quelconque des revendications 9 à 12, **caractérisé en ce que** sur la planche (51-53) adjacente est disposée une latte supplémentaire (75), qui forme avec la latte (71) un joint d'étanchéité à fente qui fait fonction de système d'étanchéité intérieur (74).

14. Dispositif selon la revendication 13, **caractérisé en ce que** la latte supplémentaire (75) est réalisée sous la forme d'un profilé en L.

15. Dispositif selon la revendication 13 ou 14, **caractérisé en ce que** la latte supplémentaire (75) est disposée sur un élément vertical des planches (51-53) adjacentes, de telle sorte que le système d'étanchéité intérieur (74) est disposé plus haut que le système d'étanchéité extérieur (71).

16. Dispositif selon la revendication 15, **caractérisé en ce que** l'élément vertical est formé par la joue (57).

17. Dispositif selon l'une quelconque des revendications 9 à 12, **caractérisé en ce que** le système d'étanchéité intérieur (74') est formé entre une face intérieure du profilé à branches (77) et une plaque supplémentaire (75') disposée sur la latte (71).

18. Dispositif selon l'une quelconque des revendications précédentes, **caractérisé en ce que** des plaques d'extrémité (56, 57), en saillie vers le bas, forment, sur les côtés longitudinaux face à face des planches (51-53) adjacentes, un conduit de gaz qui débouche dans le conduit de transport (8) par l'intermédiaire du système d'étanchéité intérieur (74).

19. Dispositif selon l'une quelconque des revendications précédentes, **caractérisé en ce que** le conduit de transport (8) a une section qui mesure 15 à 50 fois la largeur des systèmes d'étanchéité (70, 74).

20. Dispositif selon l'une quelconque des revendications précédentes, **caractérisé en ce que** le système d'étanchéité intérieur (74) possède une résistance à l'écoulement qui est inférieure à celle du système d'étanchéité extérieur (70).

21. Dispositif selon la revendication 20, **caractérisé en ce que** la résistance à l'écoulement est 2 à 50 fois inférieure.
